# EUROPÄISCHE PATENTSCHRIFT

(11) **EP 1 171 716 B1**
(45) Veröffentlichungstag und Bekanntmachung des Hinweises auf die Patenterteilung: **19.11.2003**
(21) Anmeldenummer: 00934906.9
(22) Anmeldetag: 08.04.2000
(51) Int. Cl.: F16B 31/02, G06K 19/06

(54) **BEFESTIGUNGSMITTEL MIT MASCHINENLESBAREM INFORMATIONSSPEICHER**
FIXING MEANS WITH MACHINE READABLE INFORMATION MEMORY
MOYENS DE FIXATION AVEC MEMOIRE D'INFORMATION A LECTURE MACHINE

(30) Priorität: 16.04.1999 DE 19917222
(43) Veröffentlichungstag der Anmeldung: 16.01.2002
(73) Patentinhaber: Schrauben Betzer GmbH & Co. Kg, 58462 Lüdenscheid (DE)
(72) Erfinder: HOFFMEISTER, Frank, D-58509 Lüdenscheid (DE); KEMPER, Martin, D-48167 Münster (DE)
(74) Vertreter: Habbel, Ludwig (Lutz), Dipl.-Ing.
(86) Internationale Anmeldenummer: DE0001149
(87) Internationale Veröffentlichungsnummer: WO00063565

(56) Entgegenhaltungen:
- DE-A- 3 327 964

## Beschreibung

Die Erfindung betrifft ein Befestigungsmittel nach dem Oberbegriff des Anspruchs 1, sowie eine Vorrichtung zur Montage eines derartigen Befestigungsmittels sowie eine Vorrichtung zum Auslesen von Informationen aus eines derartigen Befestigungsmittels.

Beispielsweise aus der DE 198 28 700 A1 sind gattungsgemäße Befestigungsmittel in Form von Schrauben bekannt, bei denen die Informationsspeicher geschützt angeordnet sind: entweder allseitig vom Schraubenmaterial selbst umgeben oder in ein zusätzliches Kunststoffmaterial eingebettet, und ggf. zudem in einer tief in die Schraube führenden Bohrung angeordnet. Diese Befestigungsmittel erfordern vergleichseise aufwendige Schreib-/ Lesegeräte, mit denen für jede Schraube individuelle Daten in den Informationsspeicher eingelesen werden können, z. B. die Eigenschaften wie die Schrauben-Vorspannkraft bei einer hergestellten Schraubverbindung.

Die vorgenannten Befestigungsmittel ermöglichen die Dokumentation der durchgeführten Verschraubungen und sind insbesondere für besonders hochwertige und somit ohnehin teure Schrauben vorgesehen, wie sie beispielsweise in der Luft- und Raumfahrttechnik verwendet werden. Zudem wird, wenn eine fehlerhafte Verschraubung vorliegt, dies lediglich dokumentiert, nicht jedoch von vornherein verhindert.

Weitere, vergleichsweise preisgünstig herstellbare Befestigungsmittel sind beispielsweise als Schrauben mit in den Schraubenkopf eingeprägten oder eingegeossenen alphanumerischen Informationen bekannt, wobei diese Informationen z. B. die Festigkeit der Schraube anzeigen, jedoch aufgrund der hohen Formkosten nicht für die Wiedergabe weiter induvidualisiernder Informationen vorgesehen sind wie z. B. Kennzeichnung des Schraubentyps, welcher durch Abmessungen und Gewindeform bestimmt ist.

Beispielsweise aus der DE 198 28 700 A1 sind gattungsgemäße Befestigungsmittel in Form von Schrauben bekannt, bei denen auf der Oberfläche des Schraubenkopfes, namlich auf der Oberseite oder umlaufend am Rand des Schraubenkopfes, ein linearer, eindimensionaler optisch lesbarer Code vorgesehen ist, beispielsweise ein Barcode.

Der Erfindung liegt die Aufgabe zugrunde, ein gattungsgemäßes Befestigungsmittel dahingehend zu verbessern, daß dieses auf je nach Verwendungszweck angemessene, möglichst preisgünstige Weise mit einer weitgehenden Individualisierung versehen werden kann und eine möglichst vollständige Dokumentation ermöglicht sowie ggf. eine preisgünstige, automatische und möglichst fehlerfreie Verarbeitung unterstützt.

Diese der Erfindung zugrundeliegende Aufgabe wird durch ein Befestigungsmittel mit den Merkmalen des Anspruchs 1 gelöst sowie durch eine Vorrichtung mit den Merkmalen des Anspruchs 5 oder 6.

Die Erfindung schlägt mit anderen Worten vor, den optischen Informationsspeicher als zweidimensionalen 2-D-Barcode auszugestalten, welcher die Informationen redundant enthalten und aus unterschiedlichen Lesewinkeln bzw. Leserichtungen lesbar machen kann, oder es können mehrschichtige, dreidimensionale 3-D-Barcodes auf kleinstem Raum eine Fülle von Informationen enthalten. Auch bei Beschädigungen der Schraubenoberfläche, z. B. durch Kratzer, Lackspritzer oder dergl., ist durch die 2D- oder 3D-Ausgestaltung des Barcodes eine Informationsdichte und damit eine Datenredundanz möglich, die vielfach noch eine Lesbarkeit der Informationen sicherstellen kann.

So können Schrauben mit gleicher Schlüsselweite, Schaftlänge und Festigkeit, aber mit unterschiedlicher Gewindelänge, durch die erwähnten Barcodes gekennzeichnet und voneinander unterschieden werden. Diese Kennzeichnung ist vergleichsweise preisgünstig, da die Befestigungsmittel nicht stückweise einzeln, sondern lediglich typweise individualisiert werden müssen und demzufolge in großer Stückzahl vorgefertigte Barcode-Träger verwendet werden können.

Die Verarbeitungswerkzeuge, z. B. ein motorisch angetriebener Schrauber, kann ggf. eine Lese-Einheit aufweisen, die auf eine bestimmte Kennzeichnung der Schraube eingestellt ist. So ist sichergestellt, daß nur ein bestimmter Schraubentyp verarbeitet werden kann, solange der Schrauber nicht auf einen anderen Schraubentyp umgestellt wird. Diese Umstellung kann von einer Prozeßsteuerung ggf. von einer zur nächsten Schraube erfolgen, so daß bei Schrauben mit gleicher Schlüsselweite, die von demselben Schrauber verarbeitet werden können, unterschiedliche Schraubentypen nacheinander abgearbeitet werden können, z. B. bei Befestigungen im Armarturenbrettbereich eines Kraftfahrzeugs mehrere Schrauben unterschiedlicher Länge.

Eine Dokumentation über die Anzugsmomente der Verschraubungen kann ebenfalls über die Prozeßsteuerung erfolgen, so daß in Verbindung mit der Sicherheit, daß nur der jeweils korrekte Schraubentyp verbaut worden ist, eine gute Fehlersicherheit erreicht wird und der Abgleich über die Verwendung des jeweils richtigen Schraubentyps eine zusätzliche, dokumentierbare Information ermöglicht.

Nach korrekter Montage kann der Informationsspeicher unleserlich werden, z. B. verwittern, verkratzen, oder überlackiert werden.

Befestigungsmittel mit einem als 2-D- und insbesondere 3-D-Barcode oder einem als Hologramm ausgebildeten Informationsspeichern zu versehen, ist technisch vergleichsweise aufwendig, so daß hierdurch die Fälschungssicherheit verbessert werden kann. Insbesondere kann der Informationsspeicher kryptographisch verschlüsselte Informationen enthalten, so daß nur in Abstimmung mit den dafür vorgesehenen Lesegeräten die korrekten Informationen aus dem Informationsspeicher auslesbar sind. Auch hierdurch wird die Herstellung der Befestigungsmittel fälschungssicherer, so daß bei sicherheitsrelevanten Baugruppen die Verwendung minderwertiger Plagiate von Befestigungsmitteln erschwert oder ausgeschlossen werden kann.

Je nach Verwendungszweck der Befestigungsmittel kann eine im Vergleich zu den optischen Informationsspeichern teurere, den jeweiligen Anforderungen hinsichtlich Sicherheit und Dokumentierbarkeit jedoch angemessene und dementsprechend anwendungsbezogen preisgünstige Individualisierung vorgesehen werden:

Vorteilhaft kann der Informationsspeicher nicht nur ausgelesen werden, sondern auch, als Schreib-/Lesespeicher ausgestaltet, mit Informationen beschrieben werden. So lassen sich nicht nur werkseitige Informationen bei der Befestigungsmittelnherstellung in der Befestigungsmittel hinterlegen, sondern für eine möglichst lückenlose Rückverfolgung können die Befestigungsmitteln auch später mit Informationen versehen werden; z.B. wann, wo und auf welche Art sie montiert wurden und ggf. an welchen Werkstücken.

Informationen über den Werkstoff der mit Hilfe der Befestigungsmittel montierten Werkstücke können zudem später bei einer Demontage ein sortenreines Recycling unterstützen, indem nicht notwendigerweise die Werkstücke selbst mit automatisch lesbaren Werkstoffkennungen versehen sind, sondern beispielsweise die ohnehin mit den Informationsspeichern ausgestatteten Befestigungsmitteln.

Der Informationsspeicher kann an- bzw. eingeklebt werden, durch Bördeln, Nieten, Einbetten, Klemmen, Aufstecken oder Anwalzen oder auf andere Weise an bzw. in dem Befestigungsmittel form- und / oder kraftschlüssig, möglichst unverlierbar, befestigt werden, wobei die Befestigungsmethode in Anpassung an die Abmessungen und Eigenschaften von Befestigungsmittel, Verschraubungswerkzeug und Informationsspeicher gewählt werden kann.

Vorteilhaft können in dem Informationsspeicher Informationen hinterlegt sein, die seitens des Herstellers des Befestigungsmittels vorgegeben sind und beispielsweise den Hersteller selbst, die verwendete Materialsorte, die Charge des verwendeten Rohmaterials oder auch den Zeitpunkt bzw. die Schicht der Befestigungsmittelherstellung betreffen. Insbesondere können optische Informationsspeicher wie Barcodes oder Hologramme vom Hersteller der Befestigungsmittel hergestellt werden, um diese Informationen zu ermöglichen.

Werden derartige Kennzeichnungen bei der Montage der Befestigungsmittel automatisch erfaßt, z.B. durch ein an einem Schrauber angeordnetes Lesegerät, so ist eine lückenlose Rückverfolgung möglich. Bei Rückrufaktionen im Automobilbereich beispielsweise kann gezielt ein Anschreiben an solche Fahrzeugbesitzer erfolgen, bei denen qualitätsmäßig bedenkliche Befestigungsmittel in den Fahrzeugen verbaut worden sind.

Es kann vorgesehen sein, zusätzlich zu einem ersten Informationsspeicher einen zweiten, unterschiedlichen Informationsspeicher zu verwenden. Diese beiden Informationsspeicher können sich hinsichtlich ihrer Informationen unterscheiden, und / oder hinsichtlich ihrer physikalischen Eigenschaften. So kann als erster Informationsspeicher ein preisgünstiger Massenartikel verwendet werden, beispielsweise ein aufklebbarer Barcode-Träger, während der zweite Informationsspeicher vom Hersteller des Befestigungsmittels beschrieben werden kann, z. B. ein magnetischer Bereich einer metallischen Schraube, der Chargennummer, Produktionsdatum oder einen möglichst fälschungssicheren Herstellercode enthält.

Auf diese Weise kann ggf. sogar eine stückweise, einzelne Individualisierung jedes Befestigungsmittels erfolgen, ohne die Produktionsgeschwindigkeit bei der Herstellung der Befestigungsmittel zu stark zu verringern. Eine Vielzahl der Informationen ist nämlich bereits auf dem ersten Informationsspeicher enthalten, und der zweite Informationsspeicher muß lediglich die gewünschten Ergänzungen enthalten. Die Verwendung eines zweiten Informationsspeichers ermöglicht es weiterhin, Informationen an zwei unterschiedlichen Stellen des Befestigungsmittels unterzubringen, so daß z. B. der erste Informationsspeicher für die Montage des Befestigungsmittel optimal zugänglich ist, z. B. am Kopf einer Schraube, während der zweite Informationsspeicher für spätere Kontrollen oder für die spätere Eingabe zusätzlicher Daten optimal zugänglich sein kann, z. B. am Schaftende derselben Schraube, z.B. zum Nachweis regelmäßiger Wartungsarbeiten.

Der Informationsspeicher kann weiterhin Informationen über die Handhabung des Befestigungsmittels enthalten, die ebenfalls vom Befestigungsmittelnhersteller hinterlegt wurden. Dies kann beispielsweise bestimmte Festigkeitswerte der Befestigungsmittel betreffen, so daß deren Verwendungszweck dadurch vorgegeben oder eingegrenzt sein kann. Weiterhin können vorgeschriebene Anzugsmomente für die Befestigung der Befestigungsmittel im Informationsspeicher hinterlegt sein oder die Zuordnung zu bestimmten Werkstücken bzw. bestimmten Werkstoffen.

Insbesondere kann daher vorteilhaft zusammenwirkend mit einem entsprechend ausgestalteten Werkzeug vorgesehen sein, die vom Werkzeug aufzubringenden Montagekräfte automatisch durch die Befestigungsmittel zu steuern, z. B. kann bei einem Schrauber vorgesehen sein, das Anzugsmoment der Schrauben automatisch durch die Befestigungsmittel zu steuern: Der Schrauber hat zugunsten einer korrekten Dokumentation ohnehin eine elektronische Auswertungseinrichtung für das aufgebrachte Anzugsmoment. Durch das aus dem Informationsspeicher der Schraube vorgegebene Sollmaß für das aufzubringende Anzugsmoment kann eine Beeinflussung des Schraubers dahingehend erfolgen, daß dieser bei Erreichen dieses in der Schraube hinterlegten Anzugmomentes automatisch abgeschaltet wird.

Wird dagegen beim Abgleich der Informationen zwischen Schrauber und Befestigungsmittel ein Fehler festgestellt, z.B. beim Abgleich von Werkstück- oder Werkstoffkenngrößen, kann der Schrauber blockiert werden, so daß die an dieser Stelle falsche Befestigungsmittel nicht montiert werden kann.

Jedoch kommen dafür nicht nur kraftbetätigte Schrauber in Frage. Aus der Praxis sind Schrauber bekannt, die sowohl handgehalten als auch handbetätigt sind und die eine elektronische Auswertung des Anzugmoments aufweisen. Eine Anzeige des momentanen Anzugmoments erfolgt mittels LCD-Feld und ein akustisches Signal ertönt bei erreichtem Soll-Anzugsmoment. Die dabei vorgesehene elektrische Energieversorgung derartiger Schrauber kann auch das Auslesen bzw. Beschreiben des Informationsspeichers in einer Schraube ermöglichen.

Auch können im informationsspeicher des Befestigungsmittels Informationen darüber hinterlegt sein, ob z. B. eine zweistufige Verschraubung erfolgen soll und mit welchen Anzugsmomenten diese zweistufige Verschraubung erfolgen soll. Auf diese Weise ist eine besonders einfache Bedienung der Schrauber auch für ungelerntes Personal möglich, da unterschiedliche Anzugsmomente für die verschiedensten Befestigungsmitteln zuverlässig eingehalten werden, ohne daß am Schrauber Einstellungen oder Umstellungen erforderlich sind, abgesehen von einem ggf. erforderlichen Wechsel des eigentlichen Schlüsselwerkzeugs, beispielsweise einer Stecknuß.

Arbeitsplatzbezogen kann ein Werkzeug konfiguriert sein, indem am Werkzeug selbst ein Informationsspeicher vorgesehen ist, der Informationen über die Werkstücke oder Werkstoffe enthält, die mit dem Schrauber befestigt werden sollen. Durch den Abgleich entsprechender Informationen zwischen Befestigungsmittel einerseits und Schrauber andererseits kann verhindert werden, daß Befestigungsmittel an der falschen Stelle verwendet werden. Dies ist insbesondere für ein anschließendes, voll automatisiertes Recycling vorteilhaft, wo ggf. die Demontagewerkzeuge Befestigungsmittel mit der entsprechenden Kennzeichnung aufsuchen, um sortenrein die entsprechenden Werkstücke einer größeren Baugruppe zu zerlegen. So kann beispielsweise eine Werkstückkennzeichnung vorgesehen sein, z. B. "Stoßstange" oder "Kotflügel", oder es können entsprechende Werkstoffkennzeichnungen vorgesehen sein, z. B. "PE", "PP" oder "PVC" für Kunststoffe bzw. "St", "Mg" oder "Al" für Metallbauteile.

Bei beschreibbaren Informationsspeichern ist aus Gründen der Fälschungs- und Manipulationssicherheit vorteilhaft vorgesehen, daß neu in den Informationsspeicher eingeschriebene Informationen keine alten Informationen überdecken oder ersetzen können. Es dürfen also keine bereits verwendeten Speicherplätze im Informationsspeicher erneut beschrieben werden, sondern jeder Neueintrag von Informationen in den Informationsspeicher darf aus Sicherheitsgründen nur auf neuen, noch frei verfügbaren Speicherplätzen erfolgen.

Wenn ohnehin während der Montage des Befestigungsmittels, z. B. während einer Verschraubung relevante Daten ermittelt werden, so können diese ggf. unmittelbar am Befestigungsmittel angezeigt werden, so daß auch ohne elektronische Lesegeräte eine Kontrolle der Montage möglich ist. Beispielsweise ist die Anordnung eines Mikrochips an bzw. in einer Schraube möglich, wobei der Mikrochip mit z.B. einer LED ausgestattet ist und bei Erreichen z.B. des vorgegebenen Anzugmoments die LED durch eine Betätigungsschaltung aktiviert wird. Nach Absetzen des Werkzeugs kann daher eine optische Kontrolle vorgenommen werden. Zur Energieversorgung einer derartigen Anzeige kann im Befestigungsmittel ein eigener Energiespeicher vorgesehen sein, jedoch kann auch ein Energiewandler für von außen zugeführte Energie vorgesehen sein, z.B. in Form einer Fotozelle, so daß bei Anleuchten der Befestigungsmittel die Fotozelle, welche die Betriebsspannung für die LED erzeugt und die LED aufleuchtet, sofern die Verschraubung korrekt erfolgte und die Betätigungsschaltung die LED "freigeschaltet" hat.

Ggf. können mehrfarbig leuchtende LEDs eingesetzt werden, z.B. handelsübliche, wahlweise rot oder grün leuchtende LEDs. Die grundsätzliche Funtionsbereitschaft der Anzeige ist dabei in jedem Fall durch das Aufleuchten der LED erkennbar, z.B. vor Verwendung der Befestigungsmittel oder bei einer späterebn Kontrolle. Zusätzlich ist anhand der Färbung eine differenzierte Aussage möglich, ob z.B. das vorgegebene Anzugsmoment bei der Verschraubung erreicht wurde oder nicht, indem die Betätigungsschaltung erst bei Erreichen dieses Anzugsmoments zwischen den entsprechenden, die Farbgebung bestimmenden Kontakten der LED umschaltet.

Zur preisgünstigen Nachrüstung von bereits vorhandenen Werkzeugen wie z. B. Schraubern kann ein Adapter vorgesehen sein, der zwischen einerseits die Abtriebswelle des Schraubers und andererseits die Stecknuß oder ein vergleichbares Schlüsselwerkzeug gebracht wird. Dieser Adapter kann beispielsweise ein feststehendes äußeres Gehäusebauteil aufweisen sowie die innen durchgeführte Verlängerung der Abtriebswelle des Schraubers.

Von diesem Adapter, der die Signalanbindung an den Informationsspeicher ermöglicht, kann eine Signal- bzw. Datenübertragung an eine weiterverarbeitende Elektronik erfolgen, die entweder in dem Adapter selbst untergebracht ist, oder am Schraubergehäuse nachträglich befestigt werden kann, oder die in einer zentralen Auswertungselektronik untergebracht ist. Diese weiterverarbeitende Elektronik wird ggf. mit einer drahtgebundenen oder auch drahtlosen Datenleitung des Schraubers verbunden, welche bereits im Schrauber zur Protokollierung von durchgeführten Verschraubungen vorgesehen ist.

Ausführungsbeispiele der Erfindung werden anhand der Zeichnung im folgenden näher erläutert. Dabei zeigen die
- Fig. 1 und 2: Unterschiedliche Befestigungsmittel,
- Fig. 3: einen Schrauber, und
- Fig. 4: ein Lesegerät mit einer optischen Anzeige zur Darstellung von aus dem Informationsspeicher eines Befestigungsmittels ausgelesenen Informationen.

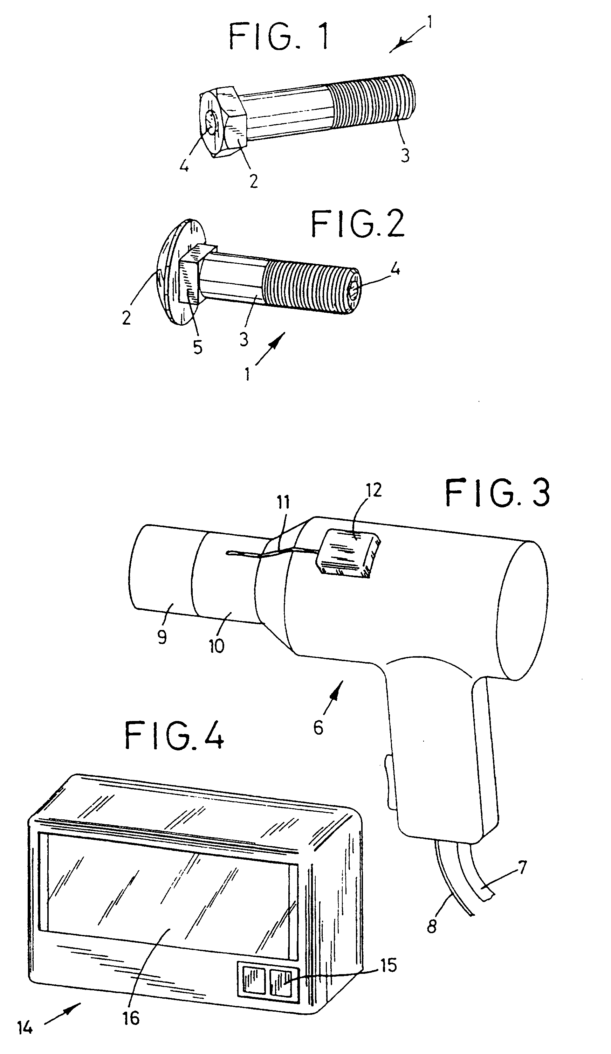

In Fig. 1 ist ein Befestigungsmittel 1 in Form einer Schraube dargestellt, die rein beispielhaft für verschiedenartig ausgestaltete Befestigungselemente, wie Schrauben, Muttern, Niete, Preßteile od. dgl. steht. Die Schraube weist einen als Sechskant ausgestalteten Schraubenkopf 2 auf sowie einen Schraubenschaft 3. Am Schraubenkopf 2 ist ein rein schematisch angedeuteter Informationsspeicher 4 angeordnet, z. B. ein 2-D-Barcode-Träger.

In Fig. 2 ist eine Schraube 1 dargestellt, bei der der Schraubenkopf 2 nicht für eine Werkzeugbetätigung vorgesehen ist. Vielmehr weist die Schraube unterhalb des Schraubenkopfes 2 eine Verdrehsicherung 5 auf, mit der sie klemmend oder formschlüssig in beispielsweise eine Blechplatte eingesetzt werden kann. Die eigentliche Befestigung dieser Schraube 1 erfolgt vom Schaftende aus.

Auch diese Schraube kann im Schraubenkopf 2 einen Informationsspeicher aufweisen. Bei dem in Fig. 2 dargestellten Ausführungsbeispiel ist jedoch vorgesehen, daß diese Schraube später nach Montage einer größeren Baugruppe vom Schraubenkopf 2 her nicht mehr zugänglich sein wird. Aus diesem Grund ist am Ende des Schraubenschaftes 3 der Informationsspeicher 4 vorgesehen.

Je nachdem, wie weit dieses Schaftende aus der später aufzubringenden Mutter herausragt, kann problemlos eine Sackbohrung in dieses Schaftende eingebracht werden, um den Informationsspeicher 4 aufzunehmen, ohne die Qualität der Verschraubung zu gefährden. Alternativ kann bei derartigen Verschraubungen vorgesehen sein, den Informationsspeicher 4 nicht an der Schraube 1 selbst vorzusehen, sondern an der zugehörigen Mutter. Auf diese Weise kann sichergestellt sein, daß der Schraubenquerschnitt nicht durch das Einbringen einer Sackbohrung geschwächt werden muß.

In Fig. 3 ist ein Verschraubungswerkzeug, ein sogenannter "Schrauber" 6 dargestellt. Der Schrauber 6 ist motorisch für den industriellen Einsatz vorgesehen. Er weist daher unabhängig von seiner ggf. pneumatischen oder elektrischen Antriebsart einen Sensor zur Feststellung des auf die Schraube aufgebrachten Anzugmomentes auf, so daß die Verschraubungen protokolliert und dokumentiert werden können. Im dargestellten Ausführungsbeispiel ist der Schrauber mit einer Druckluft- oder Elektro-Anschlußleitung 7 zur Energieversorgung des Schraubermotors versehen, jedoch sind auch nicht motorisch getriebene Schrauber erfindungsgemäß verwendbar. Zusätzlich ist ein Datenkabel 8 vorgesehen, welches vorteilhaft abweichend von dem dargestellten Ausführungsbeispiel in einer Umhüllung angeordnet sein kann, die das Datenkabel 8 sowie die Anschlußleitung 7 gemeinsam umgibt.

Der Schrauber 6 ist für die Montage von Sechskantkopf-Schrauben vorgesehen und daher mit einer Stecknuß 9 ausgestattet. Die Stecknuß 9 ist nicht direkt auf die üblicherweise als Vierkant ausgestaltete Welle des Schraubers 6 aufgesteckt, sondern befindet sich auf einem Adapter 10, der seinerseits auf dem Schrauber 6 befestigt ist und dessen Welle verlängert.

Weiterhin weist der Adapter 10 Lese- bzw. Schreibeinrichtungen auf, um auf die Informationsspeicher 4 der Schrauben 1 zuzugreifen. Ein Übertragungskabel 11 verläuft vom Adapter 10 zu einer elektronischen Schaltung 12, die ihrerseits mit der Elektronik des Schraubers 6 und damit mit dem Datenkabel 8 in Verbindung steht.

Aus dem Informationsspeicher 4 einer Schraube 1 ausgelesene Daten können daher über den Adapter 10 und die elektronische Schaltung 12 sowie das Datenkabel 8 in an sich bekannter Weise zur Protokollierung und Dokumentation der Verschraubungen Verwendung finden. Darüber hinaus ist eine Steuerung des Schraubers 6 unmittelbar durch die Schraube 1 möglich, indem beispielsweise die Abschaltung des Schraubers 6 dann ausgelöst wird, wenn der Schrauber 6 das erforderliche Anzugsmoment aufgebracht hat, welches im Informationsspeicher 4 der Schraube 1 dokumentiert ist.

Umgekehrt können vom Schrauber Informationen in den Informationsspeicher 4 einer Schraube 1 geschrieben werden, beispielsweise das tatsächlich aufgebrachte Antriebsmoment sowie Informationen zur Identifizierung des Schraubers, des Werkplatzes, von Datum und Uhrzeit od. dgl.

Fig. 4 zeigt ein handgehaltenes, tragbares Lesegerät 14, welches auf seiner Frontseite einen Ein-/Ausschalter 15 und ein Anzeigenfeld 16 aufweist. Mit Hilfe des Lesegerätes 14 kann eine Kontrolle von Schrauben 1 erfolgen, wobei deren Informationsspeicher 4 ausgelesen werden. Insbesondere bei bereits fertig montierten Verschraubungen kann auf diese Weise eine Qualitätskontrolle durchgeführt werden oder es kann in Reklamationsfällen festgestellt werden, ob der geeignete Schraubentyp vorliegt, bzw. - wenn es sich bei den Informationsspeichern um beschreibbare Speicher handelt und diese Montagedaten enthalten - kann festgestellt werden, ob die Montage korrekt erfolgt ist.

In Ergänzung dieses Ausführungsbeispiels kann auch vorgesehen sein, am Lesegerät eine Eingabemöglichkeit für bestimmte Kenngrößen zu schaffen. In diesem Fall kann z.B. die Kenn- Nr. eines bestimmten Schraubentyps eingegeben und mit Hilfe des Lesegerätes die entsprechende Schraube bzw. eine Vielzahl dieser Schrauben gesucht werden. Dies kann bei noch nicht montierten oder bei demontierten Schrauben zum Unterscheiden von Schrauben mit gleichem Aussehen dienen. Bei montierten Schrauben kann es zum Unterscheiden von sehr unterschiedlichen Schrauben dienen, deren sichtbarer Bereich (z. B. der Kopf) jedoch gleich aussieht, oder zum Auffinden von Schrauben, die aus einer fehlerhaften Charge stammen oder bei denen ein vorgegebener Wartungs- bzw. Kontrollzeitraum überschritten wurde und die nun z.B. auf ihren Festsitz kontrolliert werden müssen. Bei unsortierten Schrauben kann eine derartige Möglichkeit, das Lesegerät zu konfigurieren, beim Suchen bzw. Sortieren von Schrauben helfen.

## Patentansprüche

1. Befestigungsmittel, wie eine Schraube, eine Unterlegscheibe, eine Mutter oder ein Niet,
mit einem von außen lesbaren Informationsspeicher,
wobei der Informationsspeicher maschinenlesbar ausgestaltet ist,
und wobei der Informationsspeicher optisch lesbare Informationen enthält,
**dadurch gekennzeichnet, daß** der Informationsspeicher (4) einen zweidimensionalen 2-D- oder einen dreidimensionalen 3-D-Barcode enthält.

2. Befestigungsmittel nach Anspruch 1, **dadurch gekennzeichnet, daß** der Informationsspeicher (4) als Hologramm ausgestaltet ist.

3. Befestigungsmittel nach Anspruch 1 oder 2, **gekennzeichnet durch** ein optisches Anzeigeelement, welches an dem Befestigungsmittel (1) in dessen nach der Befestigung sichtbar verbleibendem Bereich angeordnet ist, sowie **durch** eine die Anzeige bei Einhaltung vorgegebener Parameter, wie einem Soll-Anzugsmoment bei Schrauben, aktivierende Betätigungsschaltung.

4. Befestigungsmittel nach einem der vorhergehenden Ansprüche, **gekennzeichnet durch** zwei unterschiedliche Informationsspeicher.

5. Vorrichtung zur Montage eines Befestigungsmittels nach einem der vorhergehenden Ansprüche,
mit einem Lesegerät zur Aufnahme von im Informationsspeicher enthaltenen Informationen,
sowie mit einer zugeordneten elektronischen Schaltung, die unter Einbeziehung derartiger Informationen die Montageparameter, wie das vorgeschriebene Anzugsmoment bei einer Schraube, steuert,
**gekennzeichnet durch** einen Adapter (10), der an einem ersten Ende mit einem Befestigungswerkzeug wie einem Schrauber (6) verbindbar ist und an einem zweiten Ende mit einem Betätigungselement wie einer Stecknuß (9) zur Betätigung des Befestigungsmittels wie einer Schraube verbindbar ist, wobei der Adapter (10) an seinem zweiten Ende eine die Datenübertragung zwischen dem Informationsspeicher (4) des Befestigungsmittels (1) und dem Adapter (10) ermöglichende Lese- oder Schreib- / Lesevorrichtung aufweist, und wobei der Adapter (10) über eine Datenleitung mit einer Auswerte-Elektronik verbindbar ist.

6. Vorrichtung zum Auslesen von Informationen aus dem Informationsspeicher (4) eines Befestigungsmittels (1) nach einem der Ansprüche 1 bis 4,
mit Anschlußmitteln zur Datenübertragung an eine Demontageeinrichtung,
wobei die Auslesevorrichtung zur Informationsübertragung betreffend Position und Typ der Befestigungsmittel (1) an
die Demontageeinrichtung nach Anspruch 5 ausgestaltet ist.

## Claims

1. Fixing means, such as a bolt, screw, washer, nut or rivet,
with an externally readable information memory,
wherein the information memory is configured to be machine-readable,
and wherein the information memory contains optically readable data,
**characterized in that** the information memory (4) contains a two-dimensional (2D) or three-dimensional (3D) barcode.

2. Fixing means according to Claim 1, **characterized in that** the information memory (4) is configured as a hologram.

3. Fixing means according to Claim 1 or Claim 2, **characterized by** an optical display element which is arranged on the fixing means (1) in the region remaining visible after fixing, and by an actuating circuit which activates the display when specific parameters, such as a required tightening torque in the case of screws, are attained.

4. Fixing means according to any one of the preceding claims, **characterized by** two different information memories.

5. Apparatus for installing a fixing means according to any one of the preceding claims, with a reading device for recording data contained in the information memory,
and with an associated electronic circuit which with the aid of such data controls installation parameters such as the prescribed tightening torque in the case of a screw, **characterized by** an adapter (10) which is connectable at its first end to a fixing tool such as a screwdriver (6) and at its second end to an actuating element such as a socket (9) for driving the fixing means such as a screw, wherein the adapter (10) has a read or write/read device allowing transmission of data between the information memory (4) of the fixing means (1) and the adapter (10) at its second end, and wherein the adapter (10) is connectable via a data line to an electronic evaluation unit.

6. Apparatus for readout of data from the information memory (4) of a fixing means (1 ) according to any one of Claims 1 to 4,
with connection means for transmission of data to a dismantling device,
wherein the reading apparatus is configured in accordance with Claim 5 to transmit data on the location and type of the fixing means (1) to the dismantling device.

## Revendications

1. Moyens de fixation, tels qu'une vis, une rondelle, un écrou ou un rivet,
avec mémoire d'informations à lecture de l'extérieur,
la mémoire d'informations étant conçue pour être lue sur machine,
et la mémoire d'informations contenant des informations à lecture optique,
**caractérisés en ce que** la mémoire d'informations (4) contient un code barre bidimensionnel en 2-D ou tridimensionnel en 3-D.

2. Moyens de fixation selon la revendication 1, **caractérisés en ce que** la mémoire d'informations (4) est conçue comme un hologramme.

3. Moyens de fixation selon la revendication 1 ou 2, **caractérisés par** un élément d'affichage optique qui est disposé sur les moyens de fixation (1) dans la zone de ceux-ci restant visible après la fixation, ainsi que par une commutation de commande activant l'affichage lors du respect des paramètres prédéfinis, tels qu'un couple initial nominal de démarrage pour les vis.

4. Moyens de fixation selon l'une des revendications précédentes, **caractérisés par** deux mémoires d'informations différentes.

5. Dispositif de montage d'un moyen de fixation selon l'une des revendications précédentes,
avec un appareil de lecture pour l'enregistrement des informations contenues dans la mémoire d'informations,
ainsi qu'avec un circuit électronique correspondant, qui commande, en intégrant ces informations, les paramètres de montage, tels que le couple initial de démarrage prescrit pour une vis,
**caractérisé par** un adaptateur (10) qui peut être relié sur une première extrémité à un outil de fixation tel qu'une visseuse (6), et sur une seconde extrémité à un élément de commande tel qu'un pignon à chaînes amovible pour la commande de l'élément de fixation tel qu'une vis, l'adaptateur (10) comprenant sur sa seconde extrémité un dispositif de lecture ou de lecture/écriture permettant la transmission de données entre la mémoire d'informations (4) du moyen de fixation (1) et l'adaptateur (10), et l'adaptateur (10) pouvant être relié via une ligne de données à un programme électronique d'analyse.

6. Dispositif de lecture des informations provenant de la mémoire d'informations (4) d'un moyen de fixation (1) selon l'une des revendications 1 à 4,
avec des moyens de raccordement en vue de la transmission des données sur une installation de démontage ;
le dispositif de lecture étant prévu sur l'installation de démontage selon la revendication 5 en vue de la transmission des informations concernant la position et le type de moyen de fixation (1).
